# DEMANDE DE BREVET EUROPEEN

(11) **EP 2 143 544 A1**
(43) Date de publication de la demande: **13.01.2010**
(21) Numéro de dépôt: 08159855.9
(22) Date de dépôt: 07.07.2008
(51) Int. Cl.: B29C 49/46, B29C 49/12, B65B 3/02, B29C 49/78, B29C 49/06

(54) **Procédé et dispositif de conditionnement d'un liquide alimentaire**

(71) Demandeur: Nestec S.A., 1800 Vevey (CH)
(72) Inventeur: Chauvin, Guillaume, 88410 Monthureux sur Saone (FR); Chimetto, Fabio, 35016 Piazzola sul Brenta (IT); Hartwig, Klaus, 54000 Nancy (FR)

(57) **Abrégé**

L'invention concerne un procédé et un dispositif de conditionnement d'un volume prédéterminé de liquide alimentaire dans un contenant en matériau thermoplastique constitué à partir d'une préforme chauffée, la préforme étant positionnée dans un moule, caractérisé en ce que le procédé comprend une étape d'injection d'au moins du liquide alimentaire dans un évidement de la préforme en sorte de favoriser une expansion de la préforme à l'intérieur du moule, le moule définissant une forme du contenant, un déplacement longitudinal d'une canne d'étirage (10) effectué pendant une période donnée assurant une élongation longitudinale de la préforme chauffée, la canne d'étirage étant immobile à l'instant de fin de la période donnée, et un volume de liquide alimentaire supérieur à une fraction prédéfinie du volume prédéterminé, préférentiellement égale à 50%, étant présent dans l'évidement audit instant de fin de la période donnée.

## Description

La présente invention concerne le domaine de la fabrication de contenants en matériau polymère, notamment en polyester. Plus particulièrement, elle concerne le domaine de la fabrication de bouteilles en polyester, de préférence en polyéthylène téréphtalate (PET) contenant un liquide, de préférence de l'eau et notamment de l'eau minérale.

Depuis de nombreuses années, les bouteilles en PET que l'on trouve habituellement dans le commerce sont fabriquées par soufflage ou soufflage-étirage, à l'air comprimé, de préformes en PET.

Une préforme se présente habituellement sous forme de tube cylindrique fermé à l'une de ses extrémités et ouvert à son extrémité opposée. La tête de la préforme, ouverte, correspond au col du contenant. Au cours du procédé classique de fabrication du contenant à partir d'une préforme, les préformes sont enfilées sur les plots cylindriques d'une chaîne de convoyage continue qui transporte ainsi les préformes à travers un four, essentiellement constitué par une section rectiligne bordée de chaque côté de moyens de chauffage par rayonnement, ce afin de conditionner en température la matière plastique pour l'étape de soufflage-étirage subséquente.

La préforme chaude est ensuite prélevée et transportée dans un moule d'une machine de soufflage. Le mouvement de transport réalisé par un bras de transfert par exemple, est coordonné avec celui de la machine de soufflage qui est généralement réalisée sous la forme d'un carrousel rotatif tournant de manière continue autour de son axe vertical et qui porte, à sa périphérie, une série de moules identiques. Ainsi, la préforme est placée dans le moule immédiatement après que celui-ci se soit ouvert et que le contenant précédemment formé soit retiré.

La préforme est préalablement chauffée de manière à être dans le moule à une température supérieure à la température de transition vitreuse (environ 100°C) afin de permettre la mise en forme par soufflage-étirage. La température de la préforme à la fin de l'étape de chauffage est légèrement supérieure à celle requise à l'intérieur du moule de la souffleuse, ce afin de tenir compte du refroidissement qui a lieu sur la distance existant entre le lieu de chauffage et le lieu du soufflage. Grâce à la présence simultanée de plusieurs moules, une telle machine de soufflage permet de produire des contenants à des cadences très élevées, de l'ordre de plusieurs dizaines de milliers d'unités à l'heure soit de l'ordre de 1000 à 2000 bouteilles par heure et par moule.

Le soufflage-étirage se fait par étirage à l'aide d'une tige métallique, une injection d'air se faisant à des pressions variant de 3 à 40 (3.10⁵ Pa à 4.10⁶ Pa). L'air est injecté à travers une buse dont l'extrémité est introduite à travers l'ouverture de la tête de la préforme.

Les bouteilles fabriquées par injections d'air sous pression ont une durée de vie relativement satisfaisante. Néanmoins, les caractéristiques et propriétés intrinsèques du PET, notamment sa spécificité qui est de cristalliser lors de l'étirage, peuvent laisser envisager des résultats encore meilleurs en modifiant le procédé de fabrication des contenants. On sait notamment que cristallinité élevée signifie meilleure tenue mécanique.

La présente invention permet d'allonger la durée de vie moyenne des contenants dans un contexte de transport, de distribution et de consommation normal. Elle permet également d'accélérer le processus industriel de production, en optimisant les étapes de production et minimisant les pertes en ligne.

Elle s'applique préférentiellement à la classe des polyesters en général, et au PET en particulier.

La demanderesse propose donc dans le contexte présenté ci-dessus un procédé de conditionnement d'un volume prédéterminé de liquide alimentaire dans un contenant en matériau thermoplastique constitué à partir d'une préforme chauffée, la préforme étant sensiblement cylindrique, par exemple, et positionnée dans un moule, le procédé comprenant une étape d'injection d'au moins du liquide alimentaire dans un évidement de la préforme en sorte de favoriser une expansion de la préforme à l'intérieur du moule, le moule définissant une forme du contenant, un déplacement longitudinal d'une canne d'étirage effectué pendant une période donnée assurant une élongation longitudinale de la préforme chauffée, la canne d'étirage étant immobile à l'instant de fin de la période donnée, et un volume de liquide alimentaire supérieur à une fraction prédéfinie du volume prédéterminé étant présent dans l'évidement audit instant de fin de la période donnée.

Ce procédé permet d'améliorer la qualité des contenants obtenus. De manière générale, la condition selon laquelle le piston de remplissage de la bouteille a déjà fait plus de la moitié de sa course totale quand l'étirage est terminé est une condition sine qua non pour que la bouteille n'explose pas dans le moule.

Selon donc une caractéristique avantageuse, un volume de liquide alimentaire supérieur à 50%, voire avantageusement 75%, du volume prédéterminé est présent dans l'évidement audit instant de fin de la période donnée.

Les contenants obtenus grâce à ce procédé ont des caractéristiques bien meilleures que ceux obtenus avec un procédé de soufflage-étirage de type classique à gonflage par fluide gazeux. Notamment, il a été constaté qu'ils avaient une durée de vie supérieure pour un poids et un type de matière donnés. Le taux de cristallinité, c'est-à-dire la masse de phase cristalline par rapport à la masse de polymère, d'un contenant obtenu par le procédé selon l'invention peut notamment être beaucoup plus important.

Selon un mode de réalisation, le déplacement et l'injection sont commandés par un dispositif de fabrication assistée par automate programmable.

Alternativement et éventuellement en combinaison, le déplacement et l'injection sont commandés par une came.

Selon une caractéristique avantageuse, au cours de ladite étape de chauffage préalable, une température de la préforme est amenée à une valeur comprise entre 50°C et 130°C, voire à une valeur comprise entre 75°C et 100°C.

Préférentiellement, une vitesse de la canne d'étirement atteinte au cours dudit déplacement est comprise entre 0.5 et 3.0 m.s⁻¹, voire comprise entre 1 et 2.5 m.s⁻¹.

Selon une caractéristique préférentielle, au cours de l'étape d'injection, un volume de liquide alimentaire a une température comprise entre 1 et 120°C, voire une température comprise entre 10 et 90°C.

II est également prévu, de manière préférentielle, qu'un rapport d'allongement longitudinal de la préforme, mesuré entre le début et la fin de l'étape d'injection est compris entre 2 et 5 ou entre 2.5 et 4.

Par ailleurs, selon un mode de réalisation, un rapport d'allongement radial de la préforme, mesuré entre le début et la fin de l'étape d'injection est compris entre 2 et 7, voire entre 3 et 4.5.

II est à souligner que l'invention s'applique tout particulièrement bien au cas où le matériau thermoplastique est choisi dans le groupe constitué des polyethyleneterephtalates, des polypropylènes, des polyéthylènes, des polycarbonates, des polystyrènes, des acides polylactiques, des polychlorures de vinyle et de leurs combinaisons.

Préférentiellement, le procédé comprend de plus une étape préalable d'injection de gaz en sorte de favoriser une expansion de ladite préforme telle que le volume de la préforme est amené jusqu'à une fraction prédéfinie, avantageusement 70%, du volume prédéterminé.

Avantageusement, l'étape préalable d'injection de gaz est suivie d'une étape d'injection de liquide alimentaire en sorte de favoriser une expansion de ladite préforme jusqu'à ce que la préforme ait atteint ledit volume prédéterminé.

En effet, l'air n'est pas autant capable que le liquide de refroidir le matériau thermoplastique en expansion. Ces caractéristiques ont donc pour avantage d'offrir un procédé plus stable et une fenêtre de mise en oeuvre du procédé élargie.

Selon une caractéristique avantageuse, le moule est amené préalablement à une température inférieure d'au moins 50°C à la température de fusion du matériau thermoplastique.

Egalement, le procédé selon l'invention peut aussi comprendre une étape ultérieure de pose d'une capsule de fermeture du contenant.

Dans ce cas, l'étape d'injection d'au moins du liquide alimentaire comprend préférentiellement une injection d'un volume de liquide alimentaire dans lequel a été préalablement introduit du gaz en sorte de créer une surpression dans le goulot du contenant après la pose d'une capsule de fermeture.

Enfin, selon un aspect, le déplacement longitudinal de la canne se fait à une vitesse constante.

Egalement, l'injection se fait à travers une tuyère à tête en forme de cloche, en sorte de limiter les risques de déformation d'un goulot de la préforme.

L'invention propose également un dispositif de conditionnement d'un volume prédéterminé de liquide alimentaire dans un contenant en matériau thermoplastique constitué à partir d'une préforme chauffée, la préforme étant sensiblement cylindrique et positionnée dans un moule, le dispositif comprenant des moyens d'injection d'au moins du liquide alimentaire dans un évidement de la préforme en sorte de favoriser une expansion de la préforme à l'intérieur du moule, le moule définissant une forme du contenant, des moyens pour assurer un déplacement longitudinal d'une canne d'étirage effectué pendant une période donnée et assurant une élongation longitudinale de la préforme chauffée, la canne d'étirage étant immobile à l'instant de fin de la période donnée, et des moyens pour assurer qu'un volume de liquide alimentaire supérieur à une fraction prédéfinie du volume prédéterminé, préférentiellement 50%, est présent dans l'évidement audit instant de fin de la période donnée.

Ce dispositif peut avantageusement comporter des moyens adaptés à mettre en oeuvre respectivement les étapes de procédé visées ci-dessus, prises séparément ou en combinaison.

L'invention va maintenant être décrite en détails, en référence aux figures annexées, relatives à des modes de réalisation donnés à titre d'exemple.
La figure 1 représente le suivi de la formation d'une bouteille d'eau minérale, selon un exemple d'art antérieur.
La figure 2 représente une échelle de cristallinité utilisée en lien avec le procédé selon l'invention.
La figure 3 représente un schéma général de l'installation utilisée.
La figure 4 représente le suivi de la formation d'une bouteille d'eau minérale selon un mode de réalisation préféré de l'invention.
La figure 5 représente un autre aspect de l'invention.

Le mode de réalisation donné ici à titre d'exemple se rapporte à un procédé de fabrication de bouteilles d'eau minérale en PET à partir d'une préforme chauffée. La préforme se présente sous la forme d'un tube cylindrique fermé à son extrémité inférieure. La tête de la préforme ouverte correspond au col de la bouteille, qui est un goulot sur lequel on visse une capsule de fermeture.

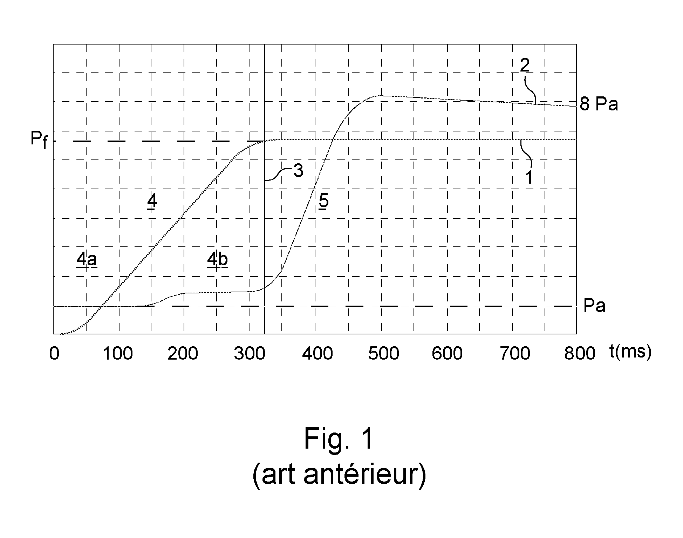

Sur la figure 1, on a représenté l'évolution au cours du temps de la position 1 de la canne d'étirage et de la pression 2 de l'air dans la préforme en expansion dans une solution de l'art antérieur.

L'axe des abscisses représente le temps, l'axe des ordonnées de gauche représente la position linéaire de la canne d'étirage, alors que l'axe des ordonnées de droite représente la pression de l'air dans la préforme en expansion.

Pendant une première phase 4 du processus, notamment entre 50 ms et 275 ms, la canne d'étirage avance de manière linéaire, avec une vitesse sensiblement constante.

320 ms après le début du processus (référence 3), la canne d'étirage a atteint sa position finale Pf dont elle ne va plus bouger.

Pendant une première partie 4a de la première phase du processus, la pression 2 de l'air dans la préforme, tout d'abord égale à la pression atmosphérique Pa jusqu'à 150 ms après le début du processus, augmente jusqu'à une valeur égale à environ 1.4 fois la pression atmosphérique, valeur atteinte au bout de 200 ms après le début du processus.

Pendant une deuxième partie 4b de la première phase du processus 100 ms supplémentaires, c'est-à-dire jusqu'à 300 ms après le début du processus, la pression reste constante.

Dans une deuxième phase 5 du processus, la pression augmente rapidement, avec une vitesse d'augmentation sensiblement constante jusqu'à 450 ms, quand elle atteint une valeur égale à environ 8 fois la pression atmosphérique.

A partir de cet instant, la pression dans la préforme en expansion diminue légèrement tout en restant de l'ordre de grandeur de 8 fois la pression atmosphérique.

Par ailleurs, et sans vouloir être tenu par une théorie scientifique, il est connu que les préformes en polyester sont amorphes et que l'étirage induit en même temps une cristallisation et une réaction exothermique. Or, le dégagement de chaleur est néfaste au développement de cristallinité.

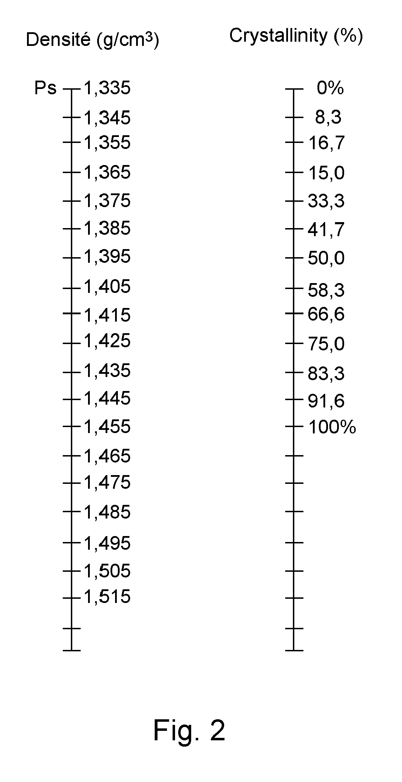

En référence à la figure 2, on opère donc par un étirage premier avec la canne d'étirage induisant une cristallisation et un dégagement de chaleur et à ce moment là, on introduit le fluide incompressible qui absorbe alors la chaleur émise et permet de déplacer le point d'équilibre de la cristallinité obtenu dans le contenant final vers les valeurs élevées de préférence entre 30 et 35%.

La mesure de la cristallinité est effectuée sur une colonne de densité de Lloyd-Davenport selon le procédé suivant. La colonne est remplie avec une solution salée (nitrate de calcium) ayant un gradient de densité. La colonne est étalonnée avec des billes ayant une densité connue comprise entre 1.335 et 1.455. Ensuite, des petits morceaux du contenant selon l'invention sont immergés dans la colonne et après un certain temps ils se stabilisent à une certaine hauteur de la colonne correspondant à une certaine densité. Les mesures sont effectuées à 23°C. Le tableau de la figure donne la cristallinité.

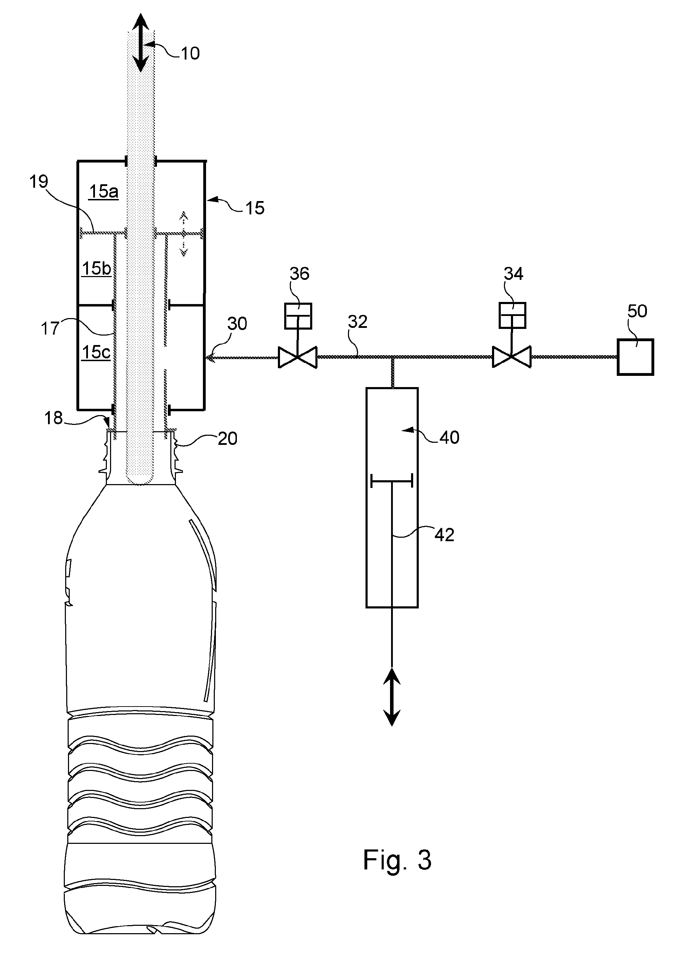

En référence à la figure 3, une canne d'étirage 10 est insérée dans un vérin 15 à air comprimé. La canne d'étirage 10 est commandée par un moteur d'étirage qui lui donne un mouvement longitudinal (représenté par une flèche).

Le vérin 15 à air comprimé comprend un cylindre 17 commandant une tête d'injection 18, que traverse la canne d'étirage 10. La tête d'injection 18 est reliée au col 20 d'une préforme de PET, placée dans un moule (non représenté) et qui, après expansion, prend la forme d'une bouteille d'eau minérale, cette forme étant déterminée par la paroi du moule.

Le vérin comprend trois chambres, les deux chambres supérieures 15a et 15b étant remplies d'air comprimé. Entre ces deux chambres supérieures, une paroi de piston 19 coulisse dans une direction parallèle à la canne d'étirage (déplacement représenté par une flèche). Cette paroi 19 est traversée en son centre par la canne d'étirage 10.

Le vérin à air comprimé comprend également une entrée latérale 30 de liquide alimentaire, ici de l'eau minérale reliée à la troisième chambre 15c du vérin, qui est la chambre inférieure. Le liquide est amené par une canalisation 32.

Une arrivée externe d'eau minérale amène le liquide via l'extrémité distante de cette canalisation 32 à une première soupape 34 qui est reliée à l'ouverture d'un cylindre de remplissage 40 à chambre unique comprenant un piston 42 commandé par un moteur de remplissage (mouvement représenté par une flèche). Ce moteur donne au piston un mouvement longitudinal dans la chambre unique du cylindre de remplissage 40.

En série derrière la première soupape 34 et l'ouverture du cylindre de remplissage 40, sur la canalisation 32, se trouve une deuxième soupape 36. La canalisation 32 débouche ensuite dans la chambre inférieure 15c du vérin à air comprimé 15.

La chambre inférieure 15c du vérin à air comprimé est traversée par le cylindre de commande 17 de la tête de remplissage 18, dont le volume interne débouche à travers la sortie inférieure du vérin à air comprimé 15 dans la tête de remplissage 18. Le cylindre de commande comprend une ouverture latérale permettant la circulation du liquide alimentaire entre la chambre inférieure du vérin et l'intérieur du cylindre de commande.

La canne d'étirage 10 traverse quant à elle le cylindre de commande 17 jusqu'à la tête de remplissage 18 et le goulot 20 de la préforme de bouteille.

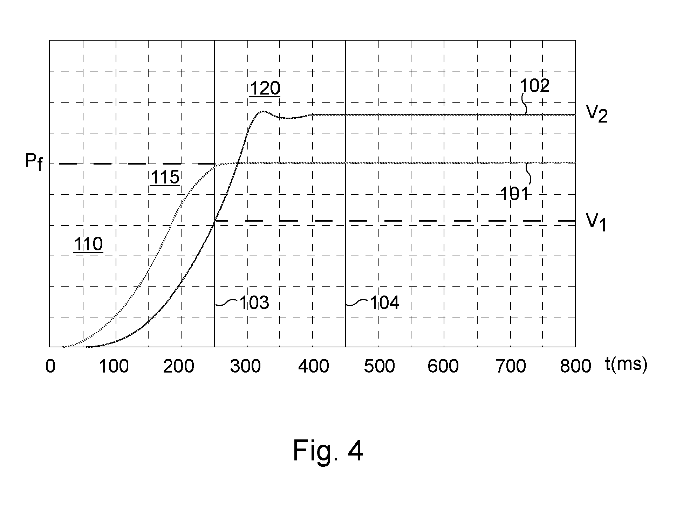

La figure 4 montre l'évolution au cours du temps de la position 101 de la canne d'étirage et la position 102 du vérin de remplissage commandant l'entrée de l'eau minérale dans la préforme en expansion.

L'axe des abscisses représente le temps. L'axe des ordonnées de gauche représente la position de la canne d'étirage, et l'axe des ordonnées de droite le volume d'eau introduit dans la préforme en expansion, qui est proportionnel à la position du vérin de remplissage.

Pendant une première partie du processus, de 0 à 250 ms, la canne d'étirage avance avec une vitesse essentiellement constante, selon un mode de réalisation préféré.

Néanmoins, selon un autre mode de réalisation, pendant une première 110 phase du processus, notamment de 0 à 150 ms, la canne d'étirage avance avec une vitesse qui croit, du fait d'une accélération positive. Pendant une deuxième phase 115 du processus, de 150 ms à 250 ms, la canne d'étirage avance avec une accélération négative et une vitesse qui décroit, jusqu'à devenir nulle à 250 ms. On comprend néanmoins que les changements de vitesse doivent être suffisamment doux pour assurer un étirage régulier et fiable du matériau thermoplastique.

250 ms après le début du processus (référence 103), la canne d'étirage a atteint sa position finale Pf, dont elle ne va plus bouger.

Au même instant, le vérin de remplissage a introduit un volume V1 d'eau minérale dans la préforme en expansion. Le volume introduit depuis le début du procédé (donc entre 0 ms et 250 ms) a augmenté progressivement, avec une augmentation progressive du débit (accélération du déplacement du vérin de remplissage).

Pendant les instants qui suivent qui constituent une troisième phase 120 du processus, jusqu'à 320 ms, l'augmentation du volume d'eau total introduit est constante, le débit étant invariable. Puis, le volume diminue subitement d'une petite fraction (de l'ordre de 4%) sur une période de 40 ms.

A partir de cet instant, le volume total introduit se stabilise autour de la valeur V2, qu'il atteint définitivement après quelques oscillations, le débit de liquide introduit étant nul.

Quelques instants plus tard, à partir de 450 ms après le début du procédé (référence 104), le vérin de remplissage a atteint une position finale dont il ne bouge plus. II a à ce moment introduit un volume d'eau minérale V2 dans la préforme en expansion. Le volume V2 est supérieur à V1, mais inférieur à 2 fois le volume V1.

Au cours du procédé d'utilisation du dispositif décrit, la température de la préforme est préalablement amenée à une valeur comprise entre 50°C et 130°C, voire entre 75°C et 100°C. Dans le mode préféré, cette valeur est de 85°C.

De manière générale, on définit une bouteille de bonne qualité sur la base du fait qu'elle n'a pas explosé dans le moule.

Les tests effectués montrent qu'il n'est pas possible de former complètement une bouteille si physiquement elle n'a pas atteint 50% de son volume final à la fin de l'étirage actif.

Au cours du procédé d'utilisation du dispositif décrit, la température de la préforme est préalablement amenée à une valeur comprise entre 50°C et 130°C, voire entre 75°C et 100°C. Dans le mode préféré cette valeur est de 95°C, le plastique utilisé étant du PET.

La canne a une vitesse comprise entre 0.5 et 3.0 m.s⁻¹, voire entre 1.0 et 2.5 m.s-1. Dans le mode préféré cette valeur est de 1.6 m.s⁻¹.

La température du liquide alimentaire est préalablement amenée à une valeur comprise entre 1 et 120°C, préférentiellement entre 10 et 90°C. Dans le mode préféré cette valeur est de 30 °C.

Le rapport d'allongement longitudinal du matériau thermoplastique est compris entre 2 et 5, voire entre 2.5 et 4. Dans le mode préféré cette valeur est de 3.5.

Le rapport d'allongement radial du matériau thermoplastique est compris entre 2 et 7, voire entre 3 et 4.5. Dans le mode préféré, cette valeur est de 4.

Le matériau thermoplastique est choisi dans le groupe constitué des polyethyleneterephtalates, des polypropylènes, des polyéthylènes, des polycarbonates, des polystyrènes, des acides polylactiques, des polychlorures de vinyle et de leurs combinaisons. Dans le mode préféré, il s'agit de PET.

La température du moule est inférieure d'au moins 50°C à la température de fusion du matériau thermoplastique, qui est dans le cas du PET de 230°C. De préférence, elle est maintenue en-dessous de 100°C. La température du moule est dans le mode préféré égale à la température ambiante.

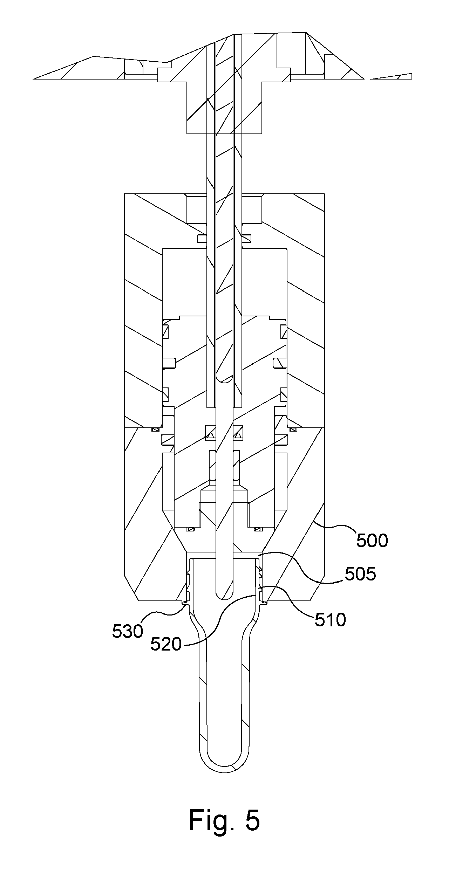

En référence à la figure 5, un embout de tuyère en forme de cloche 500 selon un mode de réalisation préféré est représenté. Les pressions interne et externe de part et d'autre de la circonférence du col de la préforme (c'est-à-dire sur les surfaces externes 510 du col, et sur les surfaces internes 520 du col) sont identiques, du fait de la présence d'un passage 505 reliant les volumes de part et d'autre de la circonférence, à l'intérieur de la tuyère. L'étanchéité du remplissage se fait à l'aide de la collerette 530 de la préforme. Grâce à ce dispositif, il n'y a pas de risque de déformation du col de la préforme au cours de l'injection d'un fluide sous pression par la tuyère.

Selon un autre mode de réalisation, un embout de tuyère maintient les surfaces externes 510 du col de la préforme de telle sorte que quand un fluide sous pression est injectée par le haut de la tuyère vers l'intérieur de l'évidement de la préforme, la pression exercée sur les parois internes 520 du col de la préforme par le fluide est compensée par le maintien apporté par les parois de l'embout de tuyère en forme de cloche. Le col de la préforme ne se déforme alors pas, malgré la pression élevée.

Bien entendu l'invention n'est pas limitée au mode de réalisation décrit et représenté par les dessins annexés et s'étend à toutes les variantes envisageables par l'homme du métier dans le cadre des revendications.

## Revendications

1. Procédé de conditionnement d'un volume prédéterminé de liquide alimentaire dans un contenant en matériau thermoplastique constitué à partir d'une préforme chauffée, la préforme étant positionnée dans un moule, **caractérisé en ce que** le procédé comprend une étape d'injection d'au moins du liquide alimentaire dans un évidement de la préforme en sorte de favoriser une expansion de la préforme à l'intérieur du moule, le moule définissant une forme du contenant, un déplacement longitudinal d'une canne d'étirage effectué pendant une période donnée assurant une élongation longitudinale de la préforme chauffée, la canne d'étirage étant immobile à l'instant de fin de la période donnée, et un volume de liquide alimentaire supérieur à une fraction prédéfinie du volume prédéterminé étant présent dans l'évidement audit instant de fin de la période donnée.

2. Procédé selon la revendication 1, **caractérisé en ce qu'**un volume de liquide alimentaire supérieur à 50% du volume prédéterminé est présent dans l'évidement audit instant de fin de la période donnée.

3. Procédé selon la revendication 1 ou la revendication 2, **caractérisé en ce que** le déplacement et l'injection sont commandés par un dispositif de fabrication assistée par ordinateur.

4. Procédé selon l'une des revendications 1 à 3, **caractérisé en ce que** le déplacement et l'injection sont commandés par une came.

5. Procédé selon l'une des revendications 1 à 4, **caractérisé en ce qu'**au cours de ladite étape de chauffage préalable une température de la préforme est amenée à une valeur comprise entre 50°C et 130°C.

6. Procédé selon la revendication 5, **caractérisé en ce qu'**au cours de ladite étape de chauffage préalable une température de la préforme est amenée à une valeur comprise entre 75°C et 100°C

7. Procédé selon l'une des revendications 1 à 6, **caractérisé en ce qu'**une vitesse de la canne d'étirement atteinte au cours dudit déplacement est comprise entre 0.5 et 3.0 m.s⁻¹.

8. Procédé selon l'une des revendications 1 à 7, **caractérisé en ce qu'**une vitesse de la canne d'étirement atteinte au cours dudit déplacement est comprise entre 1 et 2.5 m.s⁻¹.

9. Procédé selon l'une des revendications 1 à 8, **caractérisé en ce qu'**au cours de l'étape d'injection, un volume de liquide alimentaire a une température comprise entre 1 et 120°C.

10. Procédé selon la revendication 9, **caractérisé en ce qu'**au cours de l'étape d'injection, un volume de liquide alimentaire a une température comprise entre 10 et 90°C.

11. Procédé selon l'une des revendications 1 à 10, **caractérisé en ce qu'**un rapport d'allongement longitudinal de la préforme, mesuré entre le début et la fin de l'étape d'injection est compris entre 2 et 5.

12. Procédé selon la revendication 11, **caractérisé en ce qu'**un rapport d'allongement longitudinal de la préforme, mesuré entre le début et la fin de l'étape d'injection est compris entre 2.5 et 4.

13. Procédé selon l'une des revendications 1 à 12, **caractérisé en ce qu'**un rapport d'allongement radial de la préforme, mesuré entre le début et la fin de l'étape d'injection est compris entre 2 et 7.

14. Procédé selon la revendication 13, **caractérisé en ce qu'**un rapport d'allongement radial de la préforme, mesuré entre le début et la fin de l'étape d'injection est compris entre 3 et 4.5.

15. Procédé selon l'une des revendications 1 à 14, **caractérisé en ce que** le matériau thermoplastique est choisi dans le groupe constitué des polyethyleneterephtalates, des polypropylènes, des polyéthylènes, des polycarbonates, des polystyrènes, des acides polylactiques, des polychlorures de vinyle et de leurs combinaisons.

16. Procédé selon l'une des revendications 1 à 15, **caractérisé en ce qu'**il comprend une étape préalable d'injection de gaz en sorte de favoriser une expansion de ladite préforme telle que le volume de la préforme est amené jusqu'à une fraction prédéfinie du volume prédéterminé.

17. Procédé selon la revendication 16, **caractérisé en ce que** la fraction prédéfinie est égale à 70% du volume prédéterminé.

18. Procédé selon la revendication 16 ou la revendication 17, **caractérisé en ce que** l'étape préalable d'injection de gaz est suivie d'une étape d'injection de liquide alimentaire en sorte de favoriser une expansion de ladite préforme jusqu'à ce que la préforme ait atteint ledit volume prédéterminé.

19. Procédé selon l'une des revendications 1 à 18, **caractérisé en ce que** le moule est amené préalablement à une température inférieure d'au moins 50°C à la température de fusion du matériau thermoplastique.

20. Procédé selon l'une des revendications 1 à 19, **caractérisé en ce qu'**il comprend de plus une étape ultérieure de pose d'une capsule de fermeture du contenant.

21. Procédé selon la revendication 20, **caractérisé en ce que** l'étape d'injection d'au moins du liquide alimentaire comprend une injection d'un volume de liquide alimentaire dans lequel a été préalablement introduit du gaz en sorte de créer une surpression dans le goulot du contenant après la pose d'une capsule de fermeture.

22. Procédé selon l'une des revendications 1 à 21, **caractérisé en ce que** le déplacement longitudinal de la canne se fait à une vitesse constante.

23. Procédé selon l'une des revendications 1 à 22, **caractérisé en ce que** ladite injection se fait à travers une tuyère à tête en forme de cloche, en sorte de limiter les risques de déformation d'un goulot de la préforme.

24. Dispositif de conditionnement d'un volume prédéterminé de liquide alimentaire dans un contenant en matériau thermoplastique constitué à partir d'une préforme chauffée, la préforme étant positionnée dans un moule, **caractérisé en ce que** le dispositif comprend des moyens d'injection d'au moins du liquide alimentaire dans un évidement de la préforme en sorte de favoriser une expansion de la préforme à l'intérieur du moule, le moule définissant une forme du contenant, des moyens pour assurer un déplacement longitudinal d'une canne d'étirage effectué pendant une période donnée et assurant une élongation longitudinale de la préforme chauffée, la canne d'étirage étant immobile à l'instant de fin de la période donnée, et des moyens pour assurer qu'un volume de liquide alimentaire supérieur à une fraction prédéfinie du volume prédéterminé est présent dans l'évidement audit instant de fin de la période donnée.
